# EUROPÄISCHE PATENTSCHRIFT

(11) **EP 2 087 472 B1**
(45) Veröffentlichungstag und Bekanntmachung des Hinweises auf die Patenterteilung: **10.07.2019**
(21) Anmeldenummer: 07801248.1
(22) Anmeldetag: 17.08.2007
(51) Int. Cl.: G07C 13/00, H04L 9/32

(54) **ELEKTRONISCHES ONLINEWAHLEN-SYSTEM**
ELECTRONIC ONLINE VOTING SYSTEM
SYSTÈME ÉLECTRONIQUE DE VOTE EN LIGNE

(30) Priorität: 24.08.2006 DE 102006039662
(43) Veröffentlichungstag der Anmeldung: 12.08.2009
(73) Patentinhaber: Deutsche Telekom AG, 53113 Bonn (DE)
(72) Erfinder: AHRENS, Andreas, 52134 Herzogenrath (DE); BUCHMANN, Johannes, 64297 Darmstadt (DE); HEINOLD, Frank, 52159 Roetgen (DE); MUES, Engelbert, NL-6291 BP Vaals (NL); VOSSEL, Anton, 52477 Alsdorf (DE); Dos Santos Araujo, Roberto Samarone, Cep: 67010-000 Ananindeua/Para (BR); Wiesmaier, Alexander, 63924 Kleinheubach (DE)
(74) Vertreter: 2K Patentanwälte Blasberg Kewitz & Reichel
(86) Internationale Anmeldenummer: PCT/DE2007/001458
(87) Internationale Veröffentlichungsnummer: WO 2008/022624

(56) Entgegenhaltungen:
- EP-A- 1 571 777
- WEN-SHENQ JUANG, CHIN-LAUNG LEI, PEI-LING YU: "A Verifiable Multi-Authorities Secret Election Allowing Abstaining from Voting" INTERNATIONAL COMPUTER SYMPOSIUM, [Online] Dezember 1998 (1998-12), Seiten 1-21, XP002284452 Tainan, Taiwan Gefunden im Internet: URL:http://citeseer.ist.psu.edu/cs> [gefunden am 2004-06-11]
- JUANG W-S ET AL: "Fair blind threshold signatures based on discrete logarithm" COMPUTER SYSTEMS SCIENCE & ENGINEERING, SURREY, GB, Bd. 16, November 2001 (2001-11), Seiten 1-21, XP002284453

## Beschreibung

Die Erfindung betrifft Vorrichtungen und Verfahren zur sicheren elektronischen Wahl im Internet, Intranet oder sonstigen Computernetz. Insbesondere wird ein sicheres Protokollverfahren für elektronische Wahlen vorgestellt. Besonders an diesem Protokoll ist die Vertrauensstellung der Bestätiger und der Auszähler.

### Hintergrund der Erfindung:

Die Erfindung gibt eine Protokollanalyse an. Diese Analyse basiert auf den Sicherheitsanforderungen für elektronische Wahlschemata, welche in der wissenschaftlichen Gemeinschaft weithin anerkannt sind.

Das Protokoll benutzt blinde Signaturen [Cha83] und Mix-Netze [Cha81], welche beide von Chaum vorgeschlagen wurden. Ausserdem ist ein öffentlicher Kanal erforderlich, welcher die Wahlinformationen für jedermann anzeigt.

Ein elektronisches Wahlprotokoll hat verschiedene Sicherheitsanforderungen zu erfüllen, die vom Anwendungskontext abhängen, in dem das Protokoll benutzt wird.

Die Sicherheitsanforderungen für elektronische Wahlschemata sind nicht standardisiert, die Wissenschaft ist sich jedoch über eine gegebene Menge von Anforderungen einig.

### Exaktheit:

- Ein gültiges Votum kann nicht geändert werden.
- Alle gültigen Voten werden gezählt.
- Ungültige Voten werden nicht gezählt.

### Demokratie:

- Nur berechtigte Wähler können wählen.
- Jeder Wähler gibt nur ein Votum ab.

### Geheimhaltung:

- Anonymität: Es ist nicht möglich ein Votum mit dem Wähler zu assoziieren der es abgegeben hat.
- Quittungsfreiheit: Kein Wähler kann beweisen, dass er ein bestimmtes Votum abgegeben hat.
- Unzwingbarkeit: Ein Wähler kann nicht gezwungen werden, ein bestimmtes Votum abzugeben.
- Alle Voten bleiben bis zum Ende der Wahl geheim.

### Verifizierbarkeit:

- Universell: Jeder kann verifizieren, dass alle gültigen Stimmen gezählt wurden.
- Individuell: Jeder Wähler kann verifizieren, dass seine gültige Stimme gezählt wurde.

Hieraus ergibt sich eine Reihe von technischen Problemen, die zu lösen sind, wenn sie auf einem Computersystem abzulaufen haben.

Die EP 1633077 A2 offenbart eine online Wahlverfahren, das jedoch die Verifizierung für Jedermann, dass alle gültigen Stimmen gezählt wurden nicht zulässt.

Die EP 1571 777 A offenbart ein Wahlverfahren.

### Überblick über die Erfindung:

Aufgabe der vorliegenden Erfindung ist ein Verfahren und eine Vorrichtung im Computerbereich bereitzustellen, die eine sichere elektronische Wahl ermöglicht.
Gelöst wird diese Aufgabe durch eine Erfindung mit den Merkmalen der unabhängigen Ansprüche.

Die Erfindung setzt auf die Verwendung eines authentischen öffentlichen schwarzen Brettsystems, auf dem jeder die dort veröffentlichten Nachrichten lesen kann, aber nur autorisierte Parteien Nachrichten ablegen können. Weiterhin kann niemand einmal geschriebene Nachrichten löschen oder überschreiben.
Die Erfindung benutzt blinde Signaturen nach Chaum [Cha83]. Dieser Mechanismus verhindert, dass der Unterschreibende eine zu signierende Nachricht lesen kann. Eine weitere Anonymisierungstechnik ist das Chaum'sche Mix-Netz [Cha81]. Grundsätzlich empfängt ein Mix-Netz eine Menge von Nachrichten, entschlüsselt diese und sendet die neuen Nachrichten in randomisierter Reihenfolge weiter. Das Netz bricht damit die Verbindung zwischen eingehenden und ausgehenden Nachrichten auf.
Um Geheimhaltung und Authentifikation zu erreichen, werden Public-Key-Systeme benutzt, wie z.B. RSA [RSA78] von Rivest et al.

Die folgenden Parteien sind Beteiligte in dem erfindungsgemäßen Verfahren:

| | |
|---|---|
| Wähler (WAH) | Der Wähler wählt in einem für Dritte uneinsehbaren Bereich |
| Bestätiger (BES) | Der Bestätiger ist dafür verantwortlich, die Voten zu bestätigen. |
| Schwarze-Brett (SWB) | Das schwarze Brett ist ein authentischer öffentlicher Aushang. |
| Mix-Netz (MIX) | Das Mix-Netz mischt die abgegebenen Voten. |
| Auszähler (AUS) | Der Auszähler ist für die Auszählung verantwortlich. |

Die folgende Notation wird in der Beschreibung des Protokolls benutzt:

| | |
|---|---|
| EL (m) | Verschlüsselung der Nachricht m mit dem öffentlichen Schlüssel von L. |
| ST (m) | Signatur über die Nachricht m mit dem privaten Schlüssel von T. |
| B (m, r) | Funktion zum blenden der Nachricht m mit einer Zufallszahl r. |
| UB (m, r) | Funktion, um die Nachricht m, die mit r geblendet wurde, zu entblenden. |
| v | Ein ausgefüllter Wahlzettel, auch Votum genannt. |

In der bevorzugten Ausführungsform ist folgende Konfiguration gegeben:
Es steht eine vertrauenswürdige Public-Key-Infrastruktur (PKI) zur Verfügung und wird eingesetzt. Alle benutzten öffentlichen Schlüssel sind validiert.

Eine Zertifizierungsstelle gibt entsprechende PKI-Zertifikate heraus. Das impliziert, dass alle Verschlüsselungen mit den richtigen öffentlichen Schlüsseln erfolgen. Alle Parteien nehmen an der PKI teil. Die eingesetzte Kryptographie ist stark und praktisch nicht zu brechen.

Zur Kommunikation wird ein Protokoll wie z.B. TCP/IP benutzt, welches das Ankommen der Nachrichten sicherstellt. Es wird ferner angenommen, dass die Kommunikation durch ein Protokoll wie z.B. PKI basiertes TLS [DA81] geschützt wird, welches die gegenseitige Authentisierung der Parteien und die Geheimhaltung der Kommunikation garantiert.

Die Registrierungsphase verläuft korrekt. Dies wird durch die korrekte manuelle Feststellung und Erfassung der Wahlberechtigten sichergestellt. Hierzu werden die Zertifikate alle Wähler vor der Phase der Stimmabgabe auf dem schwarzen Brett veröffentlicht.

Es gibt eine vertrauenswürdige Zugangskontrolle zur elektronischen Wahlkabine. Diese stellt sicher, dass nur berechtigte Wähler die Kabine betreten, und dass sich jeweils nur eine Person in der Kabine befindet. Die Kabine ist mechanisch so konstruiert, dass es nicht möglich ist, den Wahlvorgang zu beobachten. Dies schließt Seitenkanalangriffe (z.B. mittels Stromverbrauchsanalyse) mit ein.

Dem elektronischem Wahlkabinensystem wird folgendermaßen vertraut:
- Auf dem elektronischen Wahlkabinensystem läuft ein Wahlkabinen-Klientensoftwareprogramm, welches das durch den Wähler erzeugte Votum weder ändert noch tauscht. Es erstellt genau das Votum, das der jeweilige Wähler abgeben will. (Verifikation der Software in Verbindung mit der Hardware)
- Die Kabine führt den Wähler durch den Wahlvorgang (zB. durch elektronische Menüstrukturen). Der Wähler kann kein im technischen Sinne ungültiges Votum erzeugen - die Erzeugung eines juristisch ungültigen Votums ist dennoch möglich. Die Unmöglichkeit zur Erzeugung eines technisch ungültigen Votums schließt die Verifikation der Bestätigersignatur über das Votum mit ein. Manuelle Eingriffe des Wählers in die Funktionsweise des Wahlkabinen-Klientensoftwareprogramms werden durch die mechanische Konstruktion der Wahlkabine verhindert.
- Der Wähler hat die Möglichkeit, sich aktiv von der Wahl zu enthalten, z.B. durch eine entsprechende Option auf dem elektronischen Wahlzettel oder Ankreuzen mehrerer Stimmen als zulässig (es ist auch denkbar, dass Enthaltungen durch die Wahlordnung ausgeschlossen sind, dann fehlt dieser Aspekt, in der Regel ist jedoch eine Enthaltung zulässig) - Erzeugung eines juristisch ungültigen Votums.
- Weder der Wähler noch irgendeine andere dritte Partei hat die Möglichkeit, den von der Kabine benutzten Faktor zum Blenden des Votums zu sehen oder zu speichern. Verhindert wird die Einsichtnahme, bzw. Speicherung des Faktors einerseits durch die mechanische Konstruktion der Wahlkabine, welche die Entnahme, bzw. den Export von Daten nicht zulässt. Zudem erfolgt die Speicherung des Faktors zum Blenden des Votums nicht sichtbar im Arbeitsspeicher des Wahlkabinensystems, welcher nach Abschluss und/oder Abbruch des Wahlvorgangs sicher gelöscht wird.
- Die Kabine zeigt dem Wähler das für ihn auf dem schwarzen Brett veröffentlichte Votum an. Das Votum muss vor der Speicherung auf dem schwarzen Brett durch den Wähler explizit bestätigt werden.
- Die Kabine konspiriert nicht mit anderen Parteien. Das Wahlkabinen-Klientensoftwareprogramm befolgt ausschließlich die Schritte des Wahlprotokolls und kommuniziert deshalb nur mit den dem System bekannten Parteien.

Dem System bzw. dem Verfahren, dass das schwarze Brett implementiert, wird wie folgt vertraut:
- Es authentisiert die Abonnenten korrekt und autorisiert den Zugriff gemäß ihrer Rolle. Die Authentifizierung der Rollen erfolgt sicher über die dem System zugrunde liegende PKI.
- Ein jeder Wahl zugrunde liegendes Zugriffs- und Berechtigungskonzept regelt die Les- und Schreibbarkeit von Daten von bzw. auf das schwarze Brett. Es kann hierdurch die Veröffentlichung von Informationen durch autorisierte Parteien nicht verweigern.
- Das schwarze Brett kann keine Informationen verändern oder löschen. Das restriktive Datenkonzept des schwarzen Brettes sieht keine Veränderung oder Löschung von Daten vor. Einmal geschriebene Daten können weder gelöscht noch geändert werden. Unterstützt wird dieser Ansatz durch moderne Datenbanktechnologien oder den Einsatz spezieller Datenträgermedien (z.B. WORM Write Once Read Multiple)
- Es konspiriert nicht mit anderen Parteien. Die entsprechenden Softwareprogramme befolgen hierzu exakt die Bestimmungen des Wahlprotokolls, welches keine unerlaubten Aktivitäten und Kommunikationen zulässt.

Ferner ist das Mix-Netz vertrauenswürdig im folgenden Sinne:
- Es mischt korrekt. Die Randomisierung der Voten geschieht hierbei durch die Vermischung der Gesamtheit aller Voten. Hierzu werden zunächst alle Voten in bekannter Reihenfolge durch das Mix-Netzsystem vom schwarzen Brett gelesen. Die Mischung der Voten erfolgt anhand eines Zufallsergebnisses, welches die Speicherung der gemischten Voten in veränderter und vom Eingang unabhängiger Reihenfolge auf dem schwarzen Brett ermöglicht.
- Damit keine andere Rolle außer dem Mix-Netzsystem die Mischung der Voten vornehmen kann, werden alle Voten im Wahlvorgang selbst durch das Wahlkabinen-KlientenSoftwareprogramm mit dem öffentlichen Schlüssel des Mix-Netzsystems verschlüsselt. Dieses ist in der Lage mittels des dazugehörigen privaten Schlüssels die Entschlüsselung und nachfolgende Mischung der Voten vorzunehmen. Der private Schlüssel oder die benutzte Permutation wird deshalb von dem Mix-Netz nicht preisgegeben.

- Darüber hinaus ist das Mix-Netzsystem nicht in der Lage Voten hinzuzufügen, bzw. zu tauschen oder zu verändern. Der Nachweis zur korrekten Funktionsweise des Mix-Netzsystems ist über ein Zero-Knowledge¹ Verfahren [GMR85] möglich.
- Es konspiriert nicht mit anderen Parteien. Die entsprechenden Softwareprogramme befolgen hierzu exakt die Bestimmungen des Wahlprotokolls, welches keine unerlaubten Aktivitäten und Kommunikationen zulässt.

Hieraus ergibt sich, dass die vertrauenswürdigen Parteien wie folgt sind:
- Das Wahlkabinensystem/verfahren.
- Das schwarze Brettsystem/verfahren.
- Das Mix-Netzsystem/verfahren.

Als nicht vertrauenswürdig können folgende Parteien betrachtet werden:
- Die Wähler.
- Das Bestätigersystem/verfahren.
- Das Auszähl-System/verfahren.
Das Wahlverfahren garantiert dennoch eine korrekte Wahl, wenngleich die genannten Parteien sich nicht ordnungsgemäß ihrer vorgegebenen Rolle verhalten. Das Missverhalten würde zu Unregelmäßigkeiten führen und entdeckt werden.

Hieraus ergibt sich in der bevorzugten Ausführungsform, dass ein gültiges Votum eines ist, dass:
- die korrekte Form hat;
- vom Bestätigersystem/verfahren elektronisch signiert ist;
- mit dem öffentlichen Schlüssel des Auszählers und des Mix-Netzes in der korrekten Reihenfolge verschlüsselt ist;
- auf dem schwarzen Brett veröffentlicht ist.

Das Verfahren besteht im Wesentlichen aus drei Phasen. Der Registrierungsphase, der Wahlphase und der Auszählphase.

Die Registrierungsphase liegt außerhalb des erfindungsgemäßen Protokolls. Es wird lediglich verlangt, dass am Ende dieser Phase eine Liste mit berechtigten Wählern und ihren Zertifikaten auf dem schwarzen Brett veröffentlicht ist. Diese Liste kann von jedem verifiziert werden.

In einem ersten Schritt holt das Bestätigersystem die Liste der Zertifikate der berechtigten Wähler vom schwarzen Brett. Dies wird vorzugsweise einmalig zu Beginn der Wahlphase gemacht, kann im Einzelfall jedoch auch immer wieder durchgeführt werden, wenn das Zertifikat des Wählers zu überprüfen ist.

Die folgenden Schritte werden für jeden Wähler wiederholt.

Der Wähler generiert sein Votum mit Hilfe des Wahlkabinensystems.

Das Votum wird mit der Wähler-Signatur geblendet und signiert. Danach wird es an das Bestätigersystem gesendet. Das Bestätigersystem verifiziert die Signatur, überprüft die Wahlberechtigung und signiert das geblendete Votum. Ferner wird überprüft ob dieser Wähler nicht schon eine Signatur erhalten hat. Wenn dies alles zutrifft, signiert das Bestätigersystem das geblendete Votum und sendet die Signatur zurück zum Wähler.

Danach wird durch das Wahlkabinensystem die Bestätigersignatur über das Votum durch Entblenden der Signatur erhalten. Es erfolgt eine Verifizierung der Bestätigersignatur.
¹ engl: Zero = Null, Knowledge = Wissen

Wenn diese korrekt ist, wird das Votum zusammen mit der Bestätigersignatur mit dem öffentlichen Schlüssel des Auszählers verschlüsselt. Dann verschlüsselt die Kabine das Ergebnis mit dem öffentlichen Schlüssel des Mix-Netzes. Das Ergebnis wird dem Wähler angezeigt.

Wenn der Wähler berechtigt ist und noch kein Votum abgegeben hat, erlaubt das schwarze-Brett-System dieses zu veröffentlichen.

Nach der Wahlphase holt sich das Mix-Netz die doppelt verschlüsselten Voten vom schwarzen Brett.

Das Mix-Netz entfernt die äußere Verschlüsselung der Voten mit seinem privaten Schlüssel. Dann mischt es sie und sendet die neue Liste zurück zum schwarzen Brett. Zu diesem Zeitpunkt sind die Voten noch immer mit dem Auszählerschlüssel verschlüsselt.
Dann holt sich das Auszähl-System die neue Liste vom schwarzen-Brett-System und entschlüsselt die Voten. Er verifiziert die Bestätigersignaturen über den Voten und prüft ob die Voten gültig sind. Dann berechnet er das Wahlergebnis.

Schließlich veröffentlicht der Auszähler alle gültigen und ungültigen Stimmen inklusiver ihrer Signaturen an den entsprechenden Stellen auf dem schwarzen Brett. Der Auszähler veröffentlicht auch seinen privaten Schlüssel und das Wahlergebnis auf dem schwarzen Brett.

### Protokollanalyse

Alle gültigen Voten werden auf dem schwarzen Brett veröffentlicht. Jedes Votum ist doppelt verschlüsselt; zunächst mit dem Auszählerschlüssel, danach mit dem Mix-Netz-Schlüssel.

Wenn jemand außer dem Mix-Netz und dem Auszähler ein Votum verändern will, muss er das verwendete Kryptosystem brechen, was nicht möglich ist.

Ein betrügerischer Auszähler könnte seinen privaten Schlüssel einem Angreifer zeigen, welcher versucht die Voten zu ändern. Da das schwarze Brett keine Änderungen zulässt, und das Mix-Netz seinen privaten Schlüssel nicht enthüllt, kann der Angreifer nicht erfolgreich sein.

Nach dem Mischen der Voten veröffentlicht das Mix-Netz diese wieder auf dem schwarzen Brett. Diese Voten sind immer noch mit dem Auszählerschlüssel verschlüsselt. Ein Angreifer, welcher den privaten Auszählerschlüssel kennt, könnte versuchen, die Voten zu fälschen. Da das schwarze Brett keine Änderungen erlaubt, wird es dieses nicht erlauben.

Zusätzlich kann jeder durch Verfolgen des Geschehens auf dem schwarzen Brett sehen, ob Voten verändert wurden.

Der Wähler benutzt die vertrauenswürdige Wahlkabine, um sein Votum zu erstellen und zu verifizieren. Dies stellt sicher, dass das Votum korrekt erstellt wird.

Das vertrauenswürdige Mix-Netz erhält die doppelt verschlüsselten Voten vom vertrauenswürdigen schwarzen Brett, mischt diese und veröffentlicht diese wieder auf dem schwarzen Brett. Die Voten sind nun nur noch mit dem Auszählerschlüssel verschlüsselt. Ein betrügerischer Auszähler könnte die Voten vom schwarzen Brett lesen, diese entschlüsseln und ein unrichtiges Ergebnis veröffentlichen.

Da jedoch der Auszähler in der Auszählphase seinen privaten Schlüssel veröffentlichen muss, kann jeder nachprüfen, ob alle Voten korrekt behandelt wurden. Dies wird durch entschlüsseln der Voten (vom schwarzen Brett) und der Verifizierung der Bestätigersignaturen erreicht.

Ein betrügerisches Mix-Netz könnte Voten löschen. Obwohl dieses leicht bemerkt werden würde, gäbe es keinen Weg die gelöschten Voten wiederherzustellen.

Da das Mix-Netz vertrauenswürdig ist, wird es das Protokoll nicht untergraben.

Die Wahlkabine stellt sicher, dass nur gültige Voten publiziert werden. Selbst wenn ein ungültiges Votum (falsche Struktur, ungültige Signatur, fehlerhafte Verschlüsselung) publiziert würde, würde dies entdeckt, wenn der Auszähler die Voten entschlüsselt hat.

Ein betrügerischer Auszähler könnte Voten invalidieren. Das kann von jedem entdeckt werden, da der Auszähler seinen privaten Schlüssel veröffentlichen muss. Dadurch kann jeder die Voten (vom schwarzen Brett) entschlüsseln und die Bestätigersignatur prüfen.

### Demokratie

Ferner können nur berechtigte Wähler wählen, solange der Bestätiger korrekt ist, so erkennt er berechtigte Wähler korrekt mittels deren digitaler Zertifikate.

Wenn der Bestätiger inkorrekt ist, könnte er Voten von nicht wahlberechtigten Personen autorisieren. Da das schwarze Brett nur Voten von berechtigten Wählern akzeptiert, wird es die gefälschten Voten zurückweisen.

Jeder Wähler gibt nur ein Votum ab, so lange der Bestätiger korrekt ist, so wird er mehrfache Wahlversuche zurückweisen. Ein nicht korrekter Bestätiger könnte mehr als ein Votum für einen Wähler bestätigen. Da jedoch das vertrauenswürdige schwarze Brett den Wähler erkennt, verhindert es mehrfache Wahlversuche.

### Geheimhaltung

Ferner ist die Geheimhaltung sichergestellt. Es ist nicht möglich, ein Votum mit dem Wähler zu assoziieren, der es abgegeben hat. Ferner ist es nicht möglich, durch Belauschen des Netzwerkverkehrs ein Votum mit einem Wähler zu assoziieren, da die Voten verschlüsselt sind und gemischt werden.
Auch ist es nicht möglich ein Votum durch Vergleichen des Wahlzeitpunktes und des Zeitpunktes, zu dem ein Votum auf dem schwarzen Brett erscheint, mit dem Wähler zu verknüpfen, da die Voten vor der Entschlüsselung gemischt werden.
Selbst wenn der Bestätiger, das schwarze Brett und der Auszähler kollaborieren, so können sie die Beziehung zwischen Votum und Wähler nicht herstellen.
Der Bestätiger hat keine Kenntnis vom Inhalt des Votums welches er signiert, das schwarze Brett erhält vom Wähler nur die verschlüsselten Voten und der Auszähler erhält eine gemischte Liste. Außerdem sind das schwarze Brett und das Mix-Netz vertrauenswürdig und würden nicht kooperieren.

Die Wähler beantragen die Validierung ihres Votums beim Bestätiger. Da dies mittels blinder Signaturen geschieht, hat auch ein nicht korrekter Bestätiger keine Möglichkeit, die Voten zu kennen.
Die Wähler veröffentlichen ihre Voten auf dem schwarzen Brett und jeder kann die verschlüsselten Voten sehen. Um die Voten zu entschlüsseln bevor sie gemischt werden, ist der private Schlüssel des Mix-Netzes nötig. Da das Mix-Netz nicht kooperiert, ist das nicht möglich. Werden die Voten nach dem Mischen mittels des privaten Auszählerschlüssels entschlüsselt, ist die Verbindung zum Wähler verschwunden, da diese nun gemischt sind.
Kein Wähler kann beweisen, dass er ein bestimmtes Votum abgegeben hat. Ein Wähler könnte sich sein Votum vom ehrlichen Bestätiger validieren lassen und diese Bestätigung vorzeigen, um sein Votum zu beweisen. Da der Wähler aber gezwungen ist, mittels eines Wahlkabinensystems, welches die kritischen Informationen zurückhält, zu wählen, ist es ihm nicht möglich die kritischen Informationen vorzuzeigen.

Ein Wähler könnte mit einem betrügerischen Bestätiger zusammenarbeiten, um sein Votum zu beweisen. Der Wähler könnte einfach dem Bestätiger seinen Blendfaktor zeigen. Wiederum ist dies dem Wähler nicht möglich, da ihm die notwendigen Informationen fehlen.

Ein Wähler kann nicht gezwungen werden, ein bestimmtes Votum abzugeben. Da das Mix-Netz und das Wahlkabinensystem vertrauenswürdig sind, hat der Wähler keine Möglichkeit, sein Votum zu zeigen oder zu beweisen. Die Wahlkabine stellt außerdem sicher, dass der Wähler während des Wählens nicht beobachtet werden kann.
Ein Wähler kann sich in der Wahlkabine von der Wahl enthalten. Tut er dies, kann nicht entdeckt werden, ob er überhaupt gewählt hat.
Alle Voten bleiben bis zum Ende der Wahl geheim. Die Voten sind doppelt mit den Schlüsseln des Mix-Netzes und des Auszählers verschlüsselt. Die einzige Möglichkeit, die Voten vor dem Ende der Wahl zu entschlüsseln ist, die privaten Schlüssel dieser Instanzen zu benutzen.
Selbst wenn ein Angreifer Zugriff auf den privaten Schlüssel des Auszählers hat, kann er die Voten nicht entschlüsseln. Er benötigt zusätzlich den privaten Schlüssel des Mix-Netzes. Da das Mix-Netz vertrauenswürdig ist, wird es nicht mit dem Angreifer zusammenarbeiten. Also bleiben die Voten bis zum Ende der Wahl geheim.

### Verifizierbarkeit

Jeder kann verifizieren, dass alle gültigen Stimmen gezählt wurden.

Nach der Registrierungsphase ist eine Liste aller berechtigten Wähler auf dem schwarzen Brett veröffentlicht. Diese Liste erlaubt es jedem zu prüfen, wer wahlberechtigt ist. Außerdem können die zugehörigen Zertifikate verifiziert werden. Da sowohl die Wähler ihre Voten als auch das Mix-Netz die gemischte Liste auf dem schwarzen Brett veröffentlichen, kann jeder die Anzahl der ursprünglichen und gemischten Voten vergleichen. Darüber hinaus ist die korrekte Funktionsweise des Mix-Netzes über einen Zero-Knowledge Beweis möglich. Da das schwarze Brett und das Mix-Netz vertrauenswürdig sind, werden sie keine Voten austauschen, hinzufügen oder löschen. Nachdem der Auszähler die Voten entschlüsselt hat, verifiziert der Auszähler die Bestätigersignaturen und veröffentlicht das Ergebnis. Der Auszähler publiziert außerdem seinen privaten Schlüssel auf dem schwarzen Brett. Dies erlaubt es jedem, die Voten zu entschlüsseln und ihre Signaturen zu prüfen. Somit kann jeder prüfen, ob alle gültigen Stimmen gezählt wurden und ob der Bestätiger korrekt gearbeitet hat. Jeder Wähler kann verifizieren, dass sein gültiges Votum gezählt wurde. Da der Wähler sein verschlüsseltes Votum auf dem schwarzen Brett veröffentlicht, kann er prüfen, ob das veröffentlichte Votum dasselbe ist, welches er mittels der Wahlkabine erstellt hat. Wie man oben gesehen hat, ist es nachprüfbar, dass alle gültigen Voten gezählt wurden. Hieraus folgt direkt, dass jedes einzelne gültige Votum gezählt wurde.

Im Folgenden werden einige Komponenten der Erfindung im Detail beschrieben.

Das schwarze-Brett/system ist ein passiver Datenspeicher. Dies bedeutet, dass das schwarze Brett keine eigene Kommunikation aufnehmen oder aufbauen kann. In diesem Zusammenhang wird das schwarze-Brett/system auch vielmehr als Instanz betrachtet, da es kein Akteur wie die übrigen Parteien ist.

Unter Berücksichtigung der Rechte von Akteuren können vom schwarzen Brett Daten entweder gelesen oder geschrieben werden. Um dem restriktiven Ansatz dieser Erfindung gerecht zu werden, ist es bei bereits geschriebenen Daten deshalb nicht möglich, diese nachträglich zu verändern.

Das schwarze Brett wird in Form einer Software-Datenbank realisiert, welche die entsprechenden Zugriffsregelungen zur Umsetzung dieser Erfindung unterstützt. Der restriktive Zugriffsschutz auf die Daten wird hierbei durch die Implementierung der Zugriffsrechte in die zu den Software-Klientenprogrammen korrespondierenden Software-Serverprogrammen der einzelnen Rollen erreicht und gesichert.

Zugriffsberechtigungen auf das schwarze Brett werden über Sicherheitsrichtlinien definiert, um Manipulationen des Datenbestandes auszuschließen. Demnach sind Veränderungen der Daten des schwarzen Brettes durch Lesezugriffe nicht möglich. Zur Geheimhaltung von Informationen existiert jedoch keine globale Leseberechtigung für alle Rollen, sondern vielmehr eine zeitliche und rollenabhängige Zugriffsbeschränkung auf die Daten des schwarzen Brettes. Zusätzlich zur Leseberechtigung existiert eine zeitliche und rollenabhängige Zugriffsbeschränkung für schreibende Zugriffe. Einmal geschriebene Daten können - mit Ausnahme des Wahlstatus der Wahl - nicht mehr geändert werden. Somit ist z.B. der Verlust von Stimmen durch Löschen auf dem schwarzen Brett ausgeschlossen. Lediglich der Wahlstatus der Wahl kann nach Abschluss einer bestimmten Phase in vordefinierter Reihenfolge und nur durch die Rolle des Wahlvorstandes schreibend geändert werden.

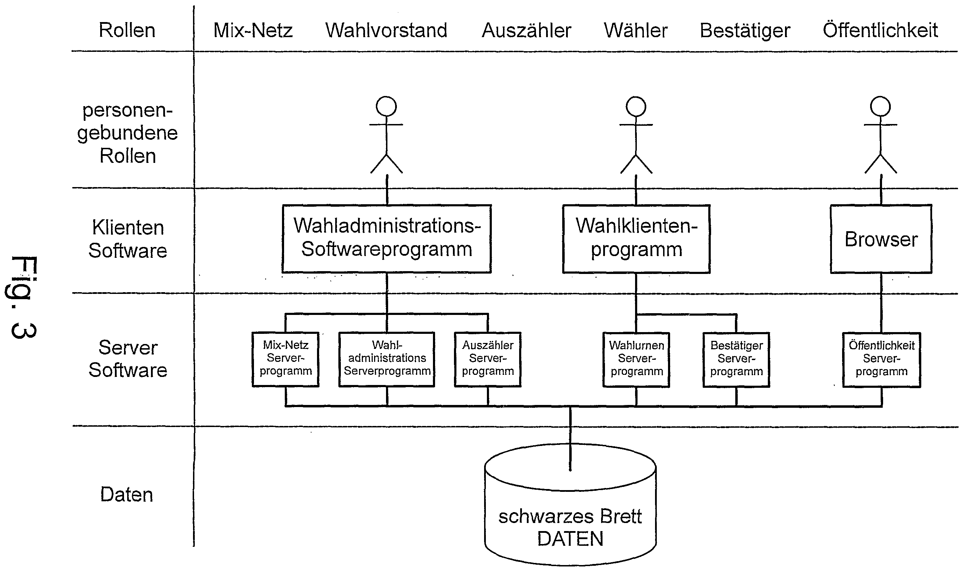

Nachfolgend werden die einzelnen Rollen in Bezug auf die unterschiedlichen Wahlphasen im Detail beschrieben. Figur 3 veranschaulicht das Rollenmodell dieser Erfindung.

Der Wähler bildet das Votum unter Zuhilfenahme des Wahlkabinensystems (Wahlkabinen-Klientenprogramm) und speichert es auf dem schwarzen Brett. Das Votum wird zum Nachweis der Stimmberechtigung vom Bestätiger blind signiert.

Das Wahlkabinen-Klientenprogramm visualisiert dem Wähler den elektronischen Stimmzettel, lässt ihn diesen ausfüllen und bildet daraus das Votum. Der Wähler kann durch bewusste Mehrfachkreuzung als die ihm in diesem Wahlverfahren zulässigen Kreuzungen, die Ungültigkeit seines Votums im juristischen Sinne erreichen. Das System weist den Wähler im Bestätigungsdialog zur Stimmauswahl eindeutig darauf hin, dass das Votum als ungültig durch das elektronische Wahlsystem gespeichert und als solches bei der Auswertung gezählt wird. Dies dient im Speziellen dazu, unbewusste Mehrfachkreuzungen über das Maß des Erlaubten zu verhindern, bzw. den Wähler auf diesen Umstand hinzuweisen. Nach Festlegung der Stimmentscheidung des Wählers kommuniziert das Wahlkabinen-Klientenprogramm mit dem Bestätiger-Serverprogramm, um mittels der Anfrage auf Bestätigung des Votums das zuvor von dem Wahlkabinen-Klientenprogramm geblendete Votum bestätigen zu lassen (Blinde Signatur). Bei gültiger Wahlberechtigung bestätigt das Bestätiger-Serverprogramm das Votum, womit das Wählervotum seine Gültigkeit erhält.

Das Wahlkabinen-Klientenprogramm verschlüsselt daraufhin das Votum nebst Bestätigersignatur mit dem öffentlichen Schlüssel des Auszählers und anschließend mit dem öffentlichen Schlüssel des Mix-Netzes. Abschließend kommuniziert das Wahlkabinen-Klienten- programm mit dem Wahlurnen-Serverprogramm, um das verschlüsselte Votum auf dem schwarzen Brett zu speichern. Das Wahlurnen-Serverprogramm prüft zunächst die Wahlberechtigung des Wählers anhand des im schwarzen Brett hinterlegten Wählerzertifikats und des Wählerstatus. Mit der erfolgreichen Ablage des Votums aktualisiert das Wahlurnen-Serverprogramm den Status des Wählers auf dem schwarzen Brett.

Die zeitlich abhängige Zugriffsberechtigung des Wahlurnen-Serverprogramm auf die Daten des schwarzen Brettes ist entsprechend ausgebildet.

Der Bestätiger erhält vom Wähler (Wahlkabinen-klientenprogramm) ein durch Blendung unkenntlich gemachtes und von ihm signiertes Votum. Zunächst prüft der Bestätiger die Wahlberechtigung des Wählers gegen das im schwarzen Brett hinterlegte Wählerzertifikat, sowie den Wahlstatus des Wählers. Ist die Prüfung erfolgreich, schickt er zur Bestätigung das geblendete Votum mit seiner Signatur (Bestätigersignatur) versehen an den Wahlberechtigten zurück. Die zeitlich abhängige Zugriffsberechtigung des Serverprogramms Bestätiger auf die Daten des schwarzen Brettes ist entsprechend ausgebildet.

Das Mix-Netz hat die Aufgabe, die gespeicherten (verschlüsselten) Voten vor der Auszählung so umzuordnen, dass kein Zusammenhang zwischen Wahlberechtigten und Votum hergestellt werden kann.
Das Mix-Netz ist als Mix-Netz-Serverprogramm ausgeführt und kommuniziert mit dem Wahladministrations-Softwareprogramm. Nachdem das Mix-Netz-Serverprogramm vom Wahladministrations-Softwareprogramm angestoßen wurde, läuft es autonom, bis die Vermischung aller Voten abgeschlossen ist. Nur die Rolle des Wahlvorstands kann über das technische Hilfsmittel (Wahladministrations-Softwareprogramm) diesen Vorgang initiieren.
Das Mix-Netz-Serverprogramm liest hierzu aus dem schwarzen Brett die ungemischten Voten und entfernt die äußere Verschlüsselung mit dem privaten Schlüssel des Mix-Netzes. Die entschlüsselten Voten werden zunächst im lokalen Zwischenspeicher des Mix-Netzes gesammelt. Nachdem alle Voten im Zwischenspeicher vorhanden sind, werden sie mittels eines Zufallszahlenalgorithmus gemischt und in einer zufälligen Reihenfolge auf dem schwarzen Brett gespeichert. Der lokale Zwischenspeicher des Mix-Netzes wird dann vollständig gelöscht.
Der jeweilige Status des Mix-Netz-Serverprogramms kann vom Wahladministrations-Softwareprogramm abgerufen werden.
Die zeitlich abhängige Zugriffsberechtigung des Serverprogramms Mix-Netz auf die Daten des schwarzen Brettes ist entsprechend ausgebildet.

Der Auszähler entschlüsselt und prüft die gemischten Voten und ermittelt daraus das Wahlergebnis.
Die technische Realisierung des Auszählers ist als Auszähler-Serverprogramm ausgeführt und kommuniziert mit dem Wahladministrations-Softwareprogramm. Zunächst wird über das Wahladministrations-Softwareprogramm die Auszählung initiiert, indem die Liste aller gemischten Voten vom schwarzen Brett angefordert wird. Nachdem alle gemischten Voten auf das Wahladministrations-Softwareprogramm übertragen wurden, erfolgt die Entschlüsselung und Auszählung der Voten. Zur Auszählung der Voten wird die entsprechende Signatur des Bestätigers zur Prüfung auf Gültigkeit des Votums herangezogen. Aus der Summierung über alle Voten wird das Ergebnis berechnet.
Abschließend wird sowohl die Liste aller gültigen und ungültigen Voten, die dazugehörigen Bestätigersignaturen, der private Auszählerschlüssel, als auch das Wahlergebnis auf dem schwarzen Brett veröffentlicht. Hierzu werden diese Daten über das Wahladministrations-Softwareprogramm zum Auszähler-Serverprogramm übertragen und hierdurch auf dem schwarzen Brett veröffentlicht.
Die zeitlich abhängige Zugriffsberechtigung des Serverprogramms Auszähler auf die Daten des schwarzen Brettes ist entsprechend vorgegeben.

Es werden folglich die Sicherheitsanforderungen für elektronische Wahlsysteme berücksichtigt. Ferner wurden die Anforderungen Exaktheit, Demokratie, Geheimhaltung und Verifizierbarkeit, die fundamental für die Sicherheit einer Wahl sind, berücksichtigt.
Zur Erfüllung wurde eine bestehende, vertrauenswürdige PKI benutzt. Die Kommunikation ist garantiert und abgesichert mittels Protokollen wie TCP/IP und TLS. Das Protokoll benutzt blinde Signaturen und ein Mix-Netz. Die Wähler sind nicht in der Lage, Quittungen zu erhalten, da die Wahlkabine das verhindert. Es wurden die Wahlkabine, das schwarze Brett und das Mix-Netz als vertrauenswürdig vorausgesetzt. Im Gegenzug muss dem Wähler, dem Bestätiger und dem Auszähler nicht vertraut werden.
Ferner wurde gezeigt, dass die nicht vertrauenswürdigen Parteien gezwungen sind, sich ehrlich zu verhalten.
Wenn sie das Protokoll untergraben, wird dies entdeckt.
Die Anzahl der vom Protokoll benötigten Nachrichten ist gering. Der Bestätiger holt sich die Liste der Zertifikate nur einmal. Jeder Wähler benötigt nur drei Nachrichten, um sein Votum abzugeben. In der Auszählphase ist die Menge der Gesamtkommunikation etwa genauso groß wie in der kompletten Wahlphase.

### Beschreibung der Figuren:

Im Folgenden werden die Figuren beschrieben, auf die die folgende detaillierte Beschreibung der bevorzugten Ausführungsform Bezug nimmt.

Es zeigt:
- Fig. 1: den Verfahrensablauf in der Wahlphase;
- Fig. 2: den Verfahrensablauf in der Auszählphase.

### Bevorzugte Ausführungsformen:

Die bevorzugten Ausführungsformen sollen keine Einschränkung darstellen. Sie dienen lediglich dem besseren Verständnis der Erfindung. Maßgeblich ist der Schutzumfang, der durch die Ansprüche bestimmt wird.

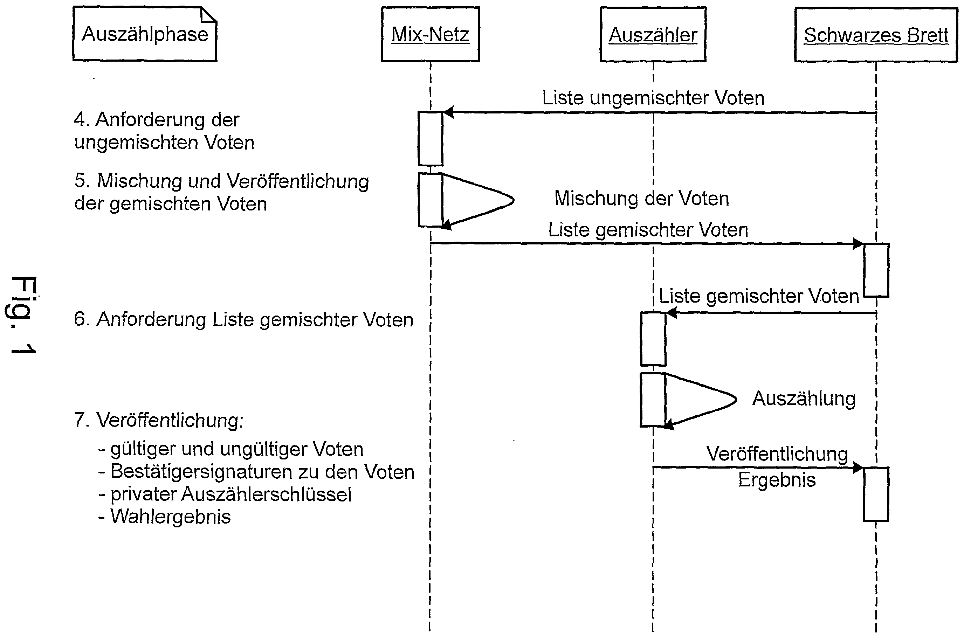

In der Figur 1 sind die Verfahrensabläufe in der Wahlphase zu entnehmen.

Stufe 0: Der Bestätiger holt die Liste der Zertifikate der berechtigten Wähler vom schwarzen Brett. Dies wird einmalig zu Begin der Wahlphase gemacht.

Die folgenden Schritte 1-3 werden für jeden Wähler wiederholt.

Stufe 1: Der Wähler generiert sein Votum v mit Hilfe der Wahlkabine. Die Kabine erzeugt eine Zufallszahl r und benutzt diese um das Votum zu blenden;
d.h. die Kabine berechnet x = B(v, r). Dann wird x vom Wähler signiert, und als (x, S_{WAH}(x)) zum Bestätiger geschickt.

Stufe 2: Der Bestätiger verifiziert die Wählersignatur, prüft ob der Wähler wahlberechtigt ist und prüft ob dieser Wähler nicht schon eine Signatur erhalten hat. Wenn dies alles zutrifft, signiert der Bestätiger x und sendet die Signatur S_{BES}(x) zurück zum Wähler.

Stufe 3: Nach Erhalt von S_{BES}(x) entfernt die Wahlkabine den Blendfaktor r und erhält die Bestätigersignatur S_{BES}(v). Die Kabine verifiziert diese Signatur. Wenn diese korrekt ist, wird das Votum v zusammen mit der Bestätigersignatur S_{BES}(v) mit dem öffentlichen Schlüssel des Auszählers verschlüsselt. D.h. die Kabine berechnet E_{AUS}(v. S_{BES}(v)). Dann verschlüsselt die Kabine das Ergebnis mit dem öffentlichen Schlüssel des Mix-Netzes und erhält E_{MIX}(E_{AUS} (v, S_{BES}(v)). Das Ergebnis wird dem Wähler angezeigt. Wenn der Wähler berechtigt ist und noch kein Votum abgegeben hat, erlaubt das schwarze Brett ihm, E_{MIX}(E_{AUS} (v, S_{BES}(v)) zu veröffentlichen.

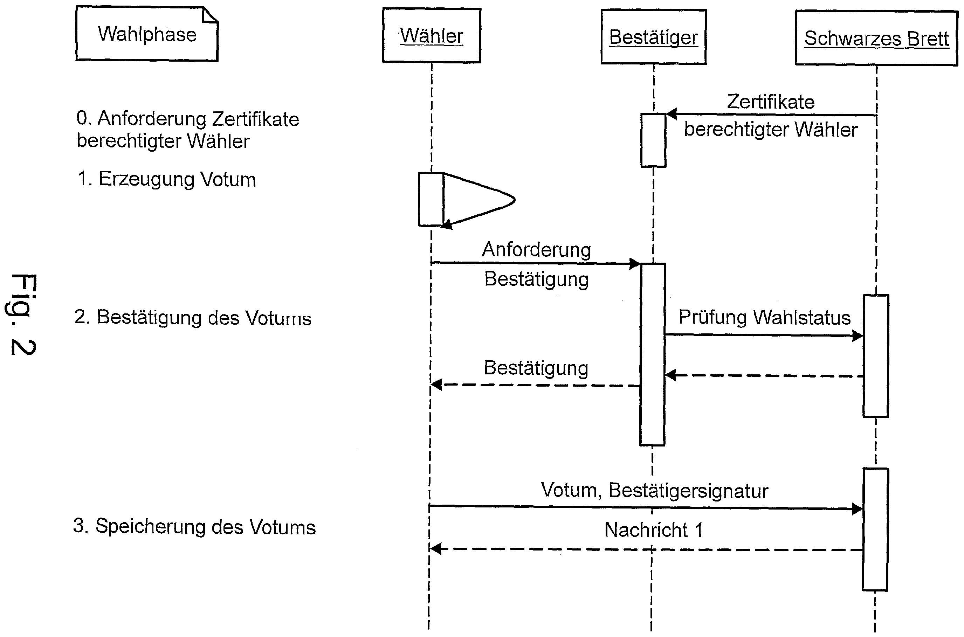

In Figur 2 werden die einzelnen Stufen der Auszählung dargestellt.

Stufe 4: Nach der Wahlphase holt sich das Mix-Netz die doppelt verschlüsselten Voten vom schwarzen Brett.

Stufe 5: Das Mix-Netz entfernt die äußere Verschlüsselung der Voten mit seinem privaten Schlüssel. Dann mischt es sie und sendet die neue Liste zurück zum schwarzen Brett. Zu diesem Zeitpunkt sind die Voten noch immer mit dem Auszählerschlüssel verschlüsselt.

Stufe 6: Dann holt sich der Auszähler die neue Liste vom schwarzen Brett und entschlüsselt die Voten. Er verifiziert die Bestätigersignaturen über den Voten und prüft, ob die Voten gültig sind. Dann berechnet er das Wahlergebnis.

Stufe 7: Schließlich veröffentlicht der Auszähler alle gültigen und ungültigen Stimmen inklusiver ihrer Signaturen an den entsprechenden Stellen auf dem schwarzen Brett. Der Auszähler veröffentlicht auch seinen privaten Schlüssel und das Wahlergebnis auf dem schwarzen Brett.

### Literaturliste

[CC97] Lorrie F. Cranor and Ron K. Cytron. Sensus: A Security_Conscious Electronic Polling System for the Internet. In Proceedings of the Hawaii International Conference on System Sciences, January 1997. http://lorrie.cranor.org/pubs/hicss/hicss.ps.
[Cha81] David Chaum. Untraceable Electronic Mail, Return Addresses and Digital Pseudonyms. Communications of the ACM, 24(2):84_88, 1981. http://web.inf.tu-dresden.de/~hf2/anon/Chaum1981/ Chaum1981.pdf.
[Cha83] David Chaum. Blind Signature System. In Advances in Cryptology: Proceedings of Crypto '83, pages 153_156. Plenum Publishing, 1983.
[GMR85] Goldwasser, Shafi ; Micali, Silvio ; Rackoff, Charles: The knowledge complexity of interactive proof-systems. In: STOC '85: Proceedings of the seventeenth annual ACM symposium on Theory of computing. New York, NY, USA : ACM Press, 1985, S. 291-304
[DA81] Tim Dierks and Christopher Allen. The TLS Protocol. IETF RFC 2246, January 1981. http://www.ietf.org/rfc/rfc2246.txt.
[KKLA01] Kwangjo Kim, Jinho Kim, Byungcheon Lee, and Gookwhan Ahn. Experimental Design of Worldwide Internet Votenng System using PKI. In Proceedings of SSGRR International Conference on Advances in Infrastructure for Electronic, Business, Science and Education on the Internet, August 2001. http://citeseer.csail.mit.edu/ 687206.html.
[LK02] Byoungcheon Lee and Kwangjo Kim. Receipt_Free Electronic Votenng Scheme with a Tamper_Resistant Randomizer. In Information Security and Cryptology _ ICISC 2002: 5th International Conference, pages 389_406, November 2002. http://link.springer.de/ link/service/series/0558/bibs/2587/25870389.htm.
[OMA+99] Miyako Ohkubo, Fumiaki Miura, Masayuki Abe, Atsushi Fujioka, and Tatsuaki Okamoto. An Improvement on a Practical Secret Votenng Scheme. In Lecture Notes in Computer Science, volume 1729, pages 225_234, 1999. http://link.springer.de/link/service/ series/0558/bibs/1729/17290225.htm.
[Rie98] Andreu Riera. An Introduction to Electronic Votenng Schemes. Technical
   Report PIRDI 9-98, Universitat Autònoma de Barcelona, September
   1998. http://pirdi.uab.es/document/pirdi9.ps.
[RSA78] Ronald L. Rivest, Adi Shamir, and Leonard M. Adleman. A Method for Obtaining Digital Signatures and Public_Key Cryptosystems. Communications of the ACM, 21(2):120_126, 1978. http: //theory.lcs.mit.edu/~rivest/rsapaper.pdf.

## Patentansprüche

1. Verfahren zur digitalen Wahl, nutzend Computersysteme, auf denen ein Wahlkabinensystem, ein Bestätigersystem, ein Mix-Netz-System, Auszähl-System und ein schwarzes-Brett-System implementiert sind, wobei das Bestätigersystem Zugriff auf die Zertifikate der berechtigten Wähler auf dem schwarzen-Brett-System hat, in dem das Bestätigersystem eine Liste der Zertifikate der berechtigten Wähler vom schwarzen-Brett-System abholt, so dass das Zertifikat des Wählers im Folgenden überprüft werden kann, umfassend die folgenden Schritte:
- ein Wähler generiert sein Votum mit Hilfe des Wahlkabinensystems;
- das Votum wird geblendet und signiert mit der Wähler Signatur vom Wahlkabinensystems;
- danach wird das geblendete und signierte Votum an das Bestätigersystem gesendet;
- das Bestätigersystem verifiziert die Signatur, überprüft die Wahlberechtigung, ferner wird überprüft, ob dieser Wähler nicht schon eine Signatur erhalten hat, und wenn dies alles zutrifft, signiert das Bestätigersystem über das geblendete Votum;
- das Bestätigersystem sendet das Votum und die Signatur zurück zum Wahlkabinensystem;
- durch das Wahlkabinensystem wird die Bestätigersignatur empfangen, das Votum entblendet;
- eine Verifizierung der Bestätigersignatur erfolgt, wenn diese korrekt ist, wird das Votum zusammen mit der Bestätigersignatur mit einem öffentlichen Schlüssel des Auszählers verschlüsselt;
- dann verschlüsselt das Wahlkabinensystem das Ergebnis mit einem öffentlichen Schlüssel eines Mix-Netzes;
- das Ergebnis wird an das schwarze-Brett-System übertragen;
- wenn der Wähler berechtigt ist, erlaubt das schwarze-Brett-System, das Votum zu veröffentlichen;
- nach der Wahlphase holt sich das Mix-Netz-System die doppelt verschlüsselten Voten vom schwarzen-Brett-System ab,
- das Mix-Netz-System entfernt die äußere Verschlüsselung der Voten mit seinem privaten Schlüssel;
- dann mischt das Mix-Netz-System diese und sendet die neue Liste der Voten zurück zum schwarzen-Brett-System, wobei zu diesem Zeitpunkt die Voten noch immer mit dem Auszählerschlüssel verschlüsselt sind,
- dann holt sich das Auszähl-System die neue Liste der Voten vom schwarzen-Brett-System und entschlüsselt die Voten;
- das Auszähl-System verifiziert die Bestätigersignaturen über den Voten und prüft ob die Voten gültig sind, falls diese gültig sind, berechnet es das Wahlergebnis;
wobei das schwarze-Brett-System in Form eines Datenbankproduktes realisiert ist, das entsprechende Zugriffsregelungen zur Umsetzung des Verfahrens unterstützt, indem ein Zugriffsschutz auf Daten durch Implementierung von Sicherheitsrichtlinien in zu Klientenprogrammen korrespondierenden Serverprogrammen erreicht wird, wobei die Sicherheitsrichtlinien Zugriffsberechtigungen definieren, und wobei einmal geschriebene Daten auf dem schwarzen-Brett-System mit Ausnahme des Wahlstatus der Wahl nicht mehr geändert werden können.

2. Das Verfahren nach Anspruch 1, umfassend die Veröffentlichung aller gültigen und ungültigen Stimmen inklusiver ihrer Signaturen an den entsprechenden Stellen auf dem schwarzen-Brett-System durch das Auszähl-System.

3. Das Verfahren nach dem vorhergehenden Anspruch, wobei der Auszähler auch seinen privaten Schlüssel und das Wahlergebnis auf dem schwarzen-Brett-Systen veröffentlicht.

4. Das Verfahren nach einem oder mehreren der vorhergehenden Ansprüche, wobei die Kommunikation garantiert und abgesichert ist mittels Protokollen wie TCP/IP and TLS.

5. Das Verfahren nach einem oder mehreren der vorhergehenden Ansprüche, wobei das Wahlkabinensystem die Validierung des Votums beim Bestätigersystem beantragt, was mittels blinder Signaturen geschieht.

6. Das Verfahren nach einem oder mehreren der vorhergehenden Ansprüche, wobei das Wahlkabinensystem einen Dialog anbietet, der es dem Wähler erlaubt, sich von der Wahl zu enthalten.

7. Das Verfahren nach einem oder mehreren der vorhergehenden Ansprüche, wobei das schwarze-Brett-System ein passiver Datenspeicher ist, der keine eigene Kommunikation aufnehmen oder aufbauen kann.

8. Das Verfahren nach einem oder mehreren der beiden vorhergehenden Ansprüche, wobei
- nach Festlegung der Stimmentscheidung des Wahlberechtigten das Wahlkabinen-Klientenprogramm mit einem Bestätiger-Serverprogramm kommuniziert, um mittels der Anfrage auf Bestätigung des Votums das zuvor vom Wahlkabinen-Klientenprogramm geblendete Votum bestätigen zu lassen,
- bei gültiger Wahlberechtigung bestätigt das Bestätiger-Serverprogramm das Votum, womit das Wählervotum Gültigkeit erhält,
- das Wahlkabinen-Klientenprogramm verschlüsselt daraufhin das Votum mit dem öffentlichen Schlüssel des Auszählers und anschließend mit dem öffentlichen Schlüssel des Mix-Nets,
- Abschließend kommuniziert das Wahlkabinen-Klientenprogramm mit einem Wahlurnen-Serverprogramm, um das verschlüsselte Votum auf dem schwarzen-Brett-System zu speichern,
- das Wahlurnen-Serverprogramm prüft zunächst die Wahlberechtigung des Wählers anhand des im schwarzen-Brett-System hinterlegten Wählerzertifikats und des Wählerstatus, mit der erfolgreichen Ablage des Votums aktualisiert das Wahlurnen-Serverprogramm den Status des Wählers.

9. Das Verfahren nach einem oder mehreren der vorhergehenden Ansprüche,
- wobei das Bestätigersystem als Bestätiger-Serverprogramm ausgebildet ist und mit dem Wahlkabinen-Klientenprogramm kommuniziert,
- wobei das Bestätiger-Serverprogramm Lesezugriff auf das schwarze-Brett-System hat,
- wobei das Bestätiger-Serverprogramm ein geblendetes und signiertes Votum vom Wahlkabinen- Klientenprogramm empfängt, und anhand des Zertifikats des Wahlberechtigen die Signatur, die Wahlberechtigung und den Wahlstatus des Wählers prüft, und im Erfolgsfall wird das geblendete Votum signiert und die Bestätigersignatur an den das Wahlkabinen-Klientenprogramm zurück gesandt.

10. Das Verfahren nach einem oder mehreren der vorhergehenden Ansprüche,
- wobei ein Mix-Netz-Serverprogramm aus dem schwarzen-Brett-System die ungemixten Voten liest und die äußere Verschlüsselung mit dem privaten Schlüssel des Mix-Netzes entfernt;
- die entschlüsselten Voten werden zunächst in einem lokalen Zwischenspeicher des Mix-Netzes gesammelt;
- nachdem alle Voten im Zwischenspeicher sind, werden sie mittels eines Zufallszahlenalgorithmus gemischt und in einer zufälligen Reihenfolge auf dem schwarzen-Brett-System gespeichert;
- der lokale Zwischenspeicher des Mix-Netzes wird dann vollständig gelöscht.

11. Das Verfahren nach dem vorhergehenden Anspruch, wobei der jeweilige Status des Mixer-Netz-Serverprogramms von einem Wahladministrations-Serverprogramm abgerufen werden.

12. Das Verfahren nach einem oder mehreren der vorhergehenden Ansprüche,
- ein Auszähler-Serverprogramm mit dem Wahladministrations-Softwareprogramm kommuniziert,
- Auszählung initiiert wird, indem die Liste aller gemischten Voten vom schwarzen-Brett-System angefordert wird,
- zur Auszählung der Voten die entsprechende Bestätigersignatur zur Prüfung auf Gültigkeit des Votums herangezogen wird, aus der Summierung über alle Voten das Ergebnis berechnet wird,
- die Liste aller gültigen und ungültigen Voten, die dazugehörigen Bestätigersignaturen, der private Auszählerschlüssel, als auch das Wahlergebnis auf dem schwarzen-Brett-System veröffentlicht wird.

13. Vorrichtungen zur digitalen Wahl, ausgebildet und eingerichtet, um ein Verfahren nach einem oder mehreren der vorhergehenden Ansprüche durchzuführen.

## Claims

1. digital voting method using computer systems on which a voting booth system, a confirmation system, a mix network system, a counting system and a black board system are implemented, wherein the confirmation system has access to the certificates of the eligible voters on the black board system, in which the confirmation system fetches a list of the certificates of the eligible voters from the black board system so that the voter's certificate can be subsequently verified, comprising the following steps:
- a voter generates his vote using the polling booth system;
- the vote is dazzled and signed with the voter's signature from the polling booth system;
- then the blinded and signed vote is sent to the polling booth system;
- the verification system verifies the signature, verifies the voter's eligibility, checks whether the voter has not already received a signature, and if so, the verification system signs over the blinded vote;
- the verification system sends the vote and signature back to the polling booth system;
- The polling booth system receives the confirmation signature and the vote Is blanked;
- verification of the verification signature is performed, If it is correct, the vote is encrypted together with the verification signature with a public key of the counter;
- then the polling booth system encrypts the result with a public key of a mix network;
- the result is transmitted to the black board system;
- If the voter is authorized, the black board system allows to publish the vote;
- after the election phase, the Mix Net system collects the doubly encrypted votes from the black board system,
- the Mix Net system removes the external encryption of votes with its private key;
- then the mix net system mixes them and sends the new list of votes back to the black board system, where at that point the votes are still encrypted with the counter key,
- then the counting system gets the new list of votes from the black board system and decodes the votes;
- the counting system verifies the confirming signatures on the votes and checks if the votes are valid, If they are valid, it calculates the election result;
wherein the black board system is implemented in the form of a database product that supports corresponding access rules for implementing the procedure by protecting access to data by implementing security policies In server programs corresponding to client programs, wherein the security policies define access permissions, and wherein once written data on the black board system cannot be changed except for the election status of the election. '

2. the procedure according to claim 1, comprising the publication of all valid and invalid votes including their signatures at the appropriate places on the black board system by the counting system, Including the publication of all valid and invalid votes.

3. the procedure according to the preceding claim, whereby the counter also publishes his private key and the election result on the black board system.

4. the procedure according to one or more of the preceding claims, where the communication is guaranteed and secured by means of protocols such as TCP/IP and TLS.

5. the procedure according to one or more of the preceding claims, where the polling booth system requests the validation of the vote from the verification system by means of blind signatures.

6. the procedure according to one or more of the preceding claims, where the polling booth system offers a dialogue that allows the voter to abstain from voting.

7. the procedure according to one or more of the preceding claims, whereby the black board system is a passive data memory which cannot establish or establish its own communication.

8. the procedure according to one or more of the two preceding claims, in which case
- the voting booth client program communicates with a confirmation server program after the voting decision of the eligible voter has been determined, in order to have the vote previously blinded by the voting booth client program confirmed by means of the request for confirmation of the vote,
- with valid voting rights, the confirming server program confirms the vote, with which the voter vote becomes valid,
- the client program of the voting booth then encrypts the vote with the public key of the counter and then with the public key of the mix-net,
- Finally, the polling booth client program communicates with a polling booth server program to store the encrypted vote on the black board system,
- The ballot box server program first checks the voter's eligibility on the basis of the voter certificate stored in the black board system and the voter status, with the successful filing of the vote the ballot box server program updates the voter's status.

9. the procedure according to one or more of the preceding claims,
- wherein the confirming system is formed as a confirming server program and communicates with the voting booth client program,
- where the confirming server program has read access to the black board system,
- wherein the confirming server program receives a blinded and signed vote from the voting booth client program, and checks the signature, the voting permission and the voting status of the voter on the basis of the certificate of the voter, and if successful, the blinded vote is signed and the confirming signature is returned to the voting booth client program

10. the procedure according to one or more of the preceding claims,
- where a mix net server program reads the unmixed votes from the black board system and removes the outer encryption with the private key of the mix net;
- the decrypted votes are first collected in a local cache of the mix net;
- after all votes have been cached, they are shuffled using a random number algorithm and stored in a random order on the black board system;
- the local cache of the mix net is then completely erased.

11. the procedure according to the preceding claim, whereby the respective status of the Mixer Net server program is retrieved by an elective administration server program.

12. the procedure according to one or more of the preceding claims,
- a counter server program communicates with the election administration software program,
- counting is initiated by requesting the list of all mixed votes from the black board system,
- the corresponding confirmation signature is used for checking the validity of the vote to count the votes, and the result is calculated from the total of all votes,
- the list of all valid and invalid votes, the corresponding confirmation signatures, the private counter key, as well as the election result Is published on the black board system.

13. digital dialling devices trained and arranged to perform a procedure according to one or more of the foregoing claims.

## Revendications

1. Un procédé de vote numérique utilisant des systèmes d'information sur lequel sont implémentés un système de bureau de vote, un système de validation, un système de réseau mixte, un système de décompte et un système de tableau noir, dans lequel le système de validation a un accès aux certificats d'électeurs sur le système de tableau noir, dans lequel le système de validation met en place une liste de certificats d'électeurs ayant capacité du système de tableau noir de façon à ce que le certificat d'électeur peut être vérifié par la suite, comprenant les étapes consistant à :
- un électeur génère son vote à l'aide du système d'isoloir ;
- le vote est effectué en aveugle et signé avec la signature de l'électeur depuis le système de bureau de vote ;
- puis le vote en aveugle et signé est envoyé au système au de validation,
- le système vérificateur vérifie la signature, vérifie la capacité de l'électeur, vérifie que cet électeur n'a pas déjà reçu une signature, et le cas échéant, le système vérificateur signe le vote en aveugle ;
- le système vérificateur renvoie le vote et la signature au système de bureau de vote ;
- le système de bureau de vote reçoit la signature de confirmation et le vote est mis en blanc,
- la vérification de la signature de vérification est effectuée et, si elle est correcte, le vote est crypté avec la signature de vérification au moyen d'une clé publique du compteur ;
- puis le système de bureau de vote chiffre le résultat avec une clé publique d'un réseau mixte ;
- le résultat est transmis au système de tableau noir ;
- si l'électeur est autorisé, le système de tableau noir autorise la publication du vote ;
- à la suite de l'élection, le système de réseau mixte collecte les votes chiffrés en double depuis le système de tableau noir ;
- le système de réseau mixte supprimer le chiffrage externe des votes au moyen de sa clé privée ;
- puis le système de réseau mixte les mélange et renvoie la nouvelle liste de votes au système de tableau noir, dans lequel, à ce stade, les votes sont encore chiffré avec la clé de décompte,
- puis le système de décompte obtient la nouvelle liste des votes du système de tableau noir et décode les votes ;
- le système de décompte vérifier les signatures de validation sur les votes et vérifie que les votes sont valides et, dans ce cas, calcule le résultat de l'élection ;
dans lequel le système de tableau noir est implémenté sous la forme d'un produit de base de données qui supporte des règles d'accès correspondantes pour l'implémentation de la procédure en protégeant l'accès aux données par l'implémentation de mesures de sécurité dans les programmes de serveur correspondant aux programmes client, dans lequel les mesures de sécurité définissent les droits d'accès, et dans lequel une fois enregistrées, les données sur le système de tableau noir ne peuvent être modifiées sauf pour le statut d'élection de l'élection.

2. Le procédé selon la revendication 1, comprenant la publication de tous les votes valides et non valides incluant leurs signatures aux places appropriées sur le système de tableau noir par le système de décompte, incluant la publication de tous les votes valides et non valides.

3. Le procédé selon la revendication précédente, dans lequel le compteur publie également sa clé privée et le résultat de l'élection sur le système de tableau noir.

4. Le procédé selon l'une ou plusieurs des revendications précédentes, dans lequel la communication est garantie et sécurisée au moyen de protocoles tels que TCP / IP et TLS.

5. Le procédé selon une ou plusieurs des revendications précédentes, dans lequel le système de bureau de vote demande la validation du vote au niveau du système de vérification au moyen de signatures aveugles.

6. Le procédé selon une ou plusieurs des revendications précédentes, dans lequel le système de bureau de vote offre un dialogue qui permet à l'électeur de s'abstenir de voter.

7. Le procédé selon une ou plusieurs des revendications précédentes, dans lequel le système de tableau noir est une mémoire de données passive qui ne peut établir ou qui n'établit pas sa propre communication.

8. Le procédé selon une ou plusieurs des deux revendications précédentes, dans lequel
- le programme client de bureau de vote communique avec le programme de serveur de validation après la détermination de la décision de vote de l'électeur ayant capacité, afin d'avoir préalablement rendu aveugle le vote par le programme client de bureau de vote confirmé au moyen, de la requête de validation du vote,
- à l'aide de droits de vote valide, le programme de serveur de validation confirme le vote, avec lequel le vote de l'électeur devient valide,
- le programme client du bureau de vote chiffre ensuite le vote au moyen de la clé publique du comptage et ensuite au moyen de la clé publique du réseau de mixage,
- finalement, le programme client de bureau de vote commuique avec un programme serveur de bureau de vote pour stocker le vote chiffré sur le système de tableau noir,
- le programme de serveur de bureau de vote vérifie d'abord la capacité de l'électeur sur la base du certificat d'électeur stocké sur le système de tableau noir et le statut d'électeur, avec le dépôt réussi du vote le programme de serveur du bureau de vote met à jour le statut de l'électeur.

9. Le procédé selon une ou plusieurs des revendications précédentes,
- dans lequel le système de confirmation est formé d'un programme serveur de validation et communique avec le programme client de bureau de vote,
- où le programme de serveur de validation a des accès en lecteur au système de tableau noir,
- dans lequel le programme de serveur de validation reçoit un vote en aveugle signé du programme client de bureau de vote, et teste la signature, la permission de vote, et le statut d'électeur sur la base du certificat de l'électeur et, en cas de réussite, le vote aveugle est signé et la signature de confirmation est retournée au programme client de bureau de vote.

10. Le procédé selon une ou plusieurs des revendications précédentes,
- dans lequel un programme de serveur de réseau mixte lit les votes non mélangés depuis le système de tableau noir et enlève le chiffrage extérieure avec la clé privée du réseau mixte ;
- les votes déchiffrés sont d'abord collectés dans un cache local du réseau mixte ;
- à la suite du cache de tous les votes, ils sont mélangés au moyen d'un algorithme de nombre aléatoire et stocké suivant un ordre aléatoire sur le système de tableau noir.
- le cache local du réseau mixte est ensuite complètement effacé.

11. Le procédé selon la revendication précédente, par lequel le statut respectif du programme de serveur de réseau mixte est retrouvé par un programme de serveur d'administration d'élection.

12. Le procédé selon une ou plusieurs des revendications précédentes,
- un programme de serveur de comptage communique avec le programme logiciel d'administration de l'élection,
- le comptage est engagé par la requête de la liste de tous les votes mixés depuis la système de tableau noir,
- la signature de validation correspondante est utilisée pour vérifier la validité du vote pour compter les voix, et le résultat est calculé à partir du total de tous les votes,
- la liste de tous les votes valides et non valides, les signatures de confirmation correspondante, les clés de comptage privées, ainsi que le résultat de l'élection est publié sur le système de tableau noir.

13. Des dispositifs de vote numérique, formés et disposés pour mettre en oeuvre un procédé selon une ou plusieurs des revendications précédentes.
